# EUROPÄISCHE PATENTSCHRIFT

(11) **EP 1 051 247 B1**
(45) Veröffentlichungstag und Bekanntmachung des Hinweises auf die Patenterteilung: **23.06.2004**
(21) Anmeldenummer: 98909393.5
(22) Anmeldetag: 05.02.1998
(51) Int. Cl.: B01J 20/12, C11B 3/10

(54) **VERFAHREN ZUR AKTIVIERUNG VON SCHICHTSILICATEN**
METHOD FOR ACTIVATING PHILLOSILICATES
PROCEDE D'ACTIVATION DE PHYLLOSILICATES

(43) Veröffentlichungstag der Anmeldung: 15.11.2000
(73) Patentinhaber: SÜD-CHEMIE AG, 80333 München (DE)
(72) Erfinder: Ortiz Niembro, José Antonio, 72590 Puebla, Pue. Mexico (MX); Martinez Reyes, Carlos, 72440 Puebla, Pue., Mexico (MX); Reinking Cejudo, Walter, 72400 Puebla, Pue., Mexico (MX); Zschau, Werner, D-82237 Steinebach (DE); Fabry, Christian, D-80333 München (DE); Ebert, Hermann Dr., D-84036 Landshut (DE)
(74) Vertreter: Westendorp, Michael, Dr.
(86) Internationale Anmeldenummer: PCT/EP1998/000619
(87) Internationale Veröffentlichungsnummer: WO 1999/039820

(56) Entgegenhaltungen:
- EP-A- 0 398 636
- WO-A-97/19899
- GB-A- 1 342 102
- US-A- 1 492 184
- US-A- 1 781 265
- US-A- 1 946 124

## Beschreibung

Die Erfindung betrifft ein Verfahren zur Aktivierung von Schichtsilicaten.

Aus der US-A-5 008 227 ist ein Verfahren zur Herstellung von säureaktivierter Bleicherde unter Verwendung eines natürlich vorkommenden sauren Attapulgit-Tons mit einem pH-Wert im Bereich von 5 bis 7 und einem Porenvolumen im Bereich von 0,25 bis 0,50 cm³/g bekannt, wobei dieser Ton mit einer Säurelösung entsprechend einer Säuremenge von 10 bis 30 Gew.-% bei einer Temperatur von etwa 25 bis 100°C (77 bis 220°F) aktiviert wird. Der säureaktivierte Ton wird nicht gewaschen, sondern direkt als Bleicherde verwendet. Neben dem Attapulgit kann auch Bentonit mit Säure aktiviert werden, doch ist man hierbei im Vergleich zu der Attapulgit-Aktivierung auf größere Säuremengen angewiesen. Die erhaltenen Produkte sollen ferner schlechtere Eigenschaften haben als der mit Säure aktivierte Attapulgit. Eine weitere Behandlung des säureaktivierten Materials findet nicht statt. Infolge der verhältnismäßig großen Säuremenge bei der Aktivierung ist es nicht immer zu vermeiden, daß die Bleicherde Säure an das zu bleichende Material abgibt.

Aus der US-A-3 029 783 ist ein Verfahren zur Säurebehandlung eines Attapulgit-Tons zur Herstellung einer verbesserten Katzenstreu bekannt. Bei diesem Verfahren werden verhältnismäßig kleine Mengen an Säure verwendet, und das säurebehandelte Material wird nicht ausgewaschen. Vor der Säurebehandlung erfolgt eine Calcinierung bei 370 bis 540°C (700 bis 1000°F). Eine weitere Calcinierung bei etwa 400 bis 590°C (750 bis 1100°F) erfolgt nach der Säurebehandlung. Durch diese Behandlungen soll die Aufnahmefähigkeit des Attapulgits für Urin und andere Körperflüssigkeiten erhöht werden. Eine Verwendung als Bleicherde wird nicht in Betracht gezogen.

Die US-A-1 492 184 beschreibt die Aktivierung von Rohton mit maximal 10 Gew.-% konzentrierter Säure. Vorzugsweise wird ein vorgetrockneter und gemahlener Rohton imprägniert. Eine Calcinierung soll ausdrücklich vermieden werden, um das Abdampfen der Säure zu verhindern.

Aus der US-A-4 487 226 ist ein Verfahren zur Behandlung von Ton bekannt, bei dem der Ton extrudiert, vermahlen und einer wäßrigen Säurelösung zugesetzt wird, um eine Suspension zu erzeugen; die Suspension wird erhitzt, worauf der säurebehandelte Ton abgetrennt, gewaschen, abfiltriert und getrocknet wird. Durch die Behandlung soll bezweckt werden, daß der Ton Verunreinigungen aus Flüssigkeiten besser herausfiltriert. Insbesondere sollen öllösliche Farbstoffe aus Ölen entfernt werden. Eine thermische Behandlung des mit Säure aktiverten Tons findet nicht statt.

Der Erfindung lag die Aufgabe zugrunde, ein Verfahren zur Aktivierung von gewissen Schichtsilicaten durch Säurebehandlung bereitzustellen, wobei die Menge der sauren Abwässer aus Gründen des Umweltschutzes möglichst gering gehalten werden sollte und die Produkte eine hohe Aktivität bei der Entfernung von Verunreinigungen aus Ölen, Fetten und Wachsen aufweisen sollten.

Gegenstand der Erfindung ist ein Verfahren zur Aktivierung von Schichtsilicaten mit einer Ionenumtauschfähigkeit(IUF) von mindestens 25 mVal/100g durch Behandlung derselben mit einer Säure, das dadurch gekennzeichnet ist, daß man das Schichtsilicat mit etwa 1-10 Gew.-% einer Säure (bezogen auf Schichtsilicat atro) bei einer Temperatur von nicht mehr als 80°C aktiviert und das aktivierte Schichtsilicat bei Temperaturen von etwa 200-400°C calciniert und gegebenenfalls zerkleinert.

Indem die Säuremenge unter 10 Gew.-% gehalten wird, liegt die Säure allenfalls in einem sehr geringen Überschuß vor, so daß eine Abtrennung der überschüssigen Säure sowie der beim Aufschlußprozeß gebildeten Salze (Alkali-, Erdalkali-, Aluminiumund Eisensalze) nicht erforderlich ist. Wesentlich ist hierbei auch die nachfolgende Calcinierung. Wahrscheinlich wandern die Salze hierbei in die Mikroporen des mit Säure aktivierten Schichtsilicats und werden darin abgeschieden. Die Mikroporen sind für die Adsorption von Verunreinigungen aus Fetten und Ölen nicht erforderlich, weil die entsprechenden Moleküle (z.B. Farbstoffe, wie Chlorophyll) nur in den Mesoporen (Porendurchmesser 2 bis 25 nm) und in den Makroporen (Porendurchmesser > 25 nm) adsorbiert werden. Beim Calcinieren werden die Salze in den Mikroporen (< 2nm) fixiert.

Die erhaltenen aktivierten Schichtsilicate brauchen infolge dieses "Selbstreinigungseffektes" nicht mehr gewaschen zu werden, insbesondere wenn das Mikroporenvolumen verhältnismäßig hoch und der Anteil der Salze nicht allzu hoch ist.

Die Calcinierung des säureaktivierten Schichtsilicats ermöglicht auch die Anwendung des erfindungsgemäßen Verfahrens auf einen breiteren Bereich von Schichtsilicaten. So sind nach dem erfindungsgemäßen Verfahren auch Materialien zugänglich, die in einer wäßrigen Suspension pH-Werte von mehr als 7 haben. Hierbei ist zum Teil zwar eine höhere Säuredosierung notwendig, aber aufgrund der Calcinierung können auch mit diesen Materialien höhere Bleichaktivitäten erhalten werden.

Die Calcinierung wird in Abhängigkeit von der Calciniertemperatur vorzugsweise über einen Zeitraum von etwa 4 Stunden bis 15 Minuten durchgeführt, wobei die Calcinierdauer umso höher ist, je tiefer die Calciniertemperatur ist, und umgekehrt.

Das calcinierte Produkt wird vor der Zerkleinerung vorzugsweise angefeuchtet, um ein günstigeres Korngrößenspektrum mit einem geringeren Feingutanteil (< 25 µm) zu erhalten.

Vorzugsweise verwendet man ein Schichtsilicat aus der Serpentin-Kaolin-Gruppe, der Talk-Pyrophylitt-Gruppe, der Smektit-Gruppe, aus der Gruppe der Vermiculite, Illite und/oder der glimmerartigen Schichtsilicate.

Zu den Schichtsilicaten der Serpentin-Kaolin-Gruppe gehören beispielsweise Chrysotil, Antigorit, Kaolinit und Halloysit. Zur Talk-Pyrophylitt-Gruppe gehören der Talk und der Pyrophyllit. Zu der Gruppe der Smektite gehören die trioktaedrischen Smektite, wie Saponit und Hectorit, und die dioktaedrischen Smektite, wie Montmorillonit, Beidellit und Nontronit. Zu der Gruppe der Chlorite gehören die trioktaedrischen und die dioktaedrischen Chlorite. Zu der Sepiolith-Palygorskit-Gruppe gehören der Sepiolith und der Palygorskit.

Unter den genannten Schichtsilicaten verwendet man als Ausgangsmaterial vorzugsweise ein Schichtsilicat, das in Form einer 9,1%igen wäßrigen Suspension einen pH-Wert von mehr als 7, vorzugsweise von etwa 7,2 bis 9,0, hat. Ein hoher pH-Wert zeigt im allgemeinen einen verhältnismäßig hohen Alkaligehalt an, was bei der Aktivierung einen höheren Säurebedarf zur Folge hat.

Die Säureaktivierung wird vorzugsweise so durchgeführt, daß man die Aktivierungsäure einer Suspension des Schichtsilicats zusetzt oder in das Schichtsilicat einknetet.

Auf diese Weise wird eine homogene Vermischung der Aktivierungssäure mit dem Schichtsilicat erreicht. Setzt man die Aktivierungssäure einer Suspension des Schichtsilicats zu, so muß das Wasser nach der anschließenden Säureaktivierung wieder verdampft werden, wodurch der Energiebedarf des Verfahrens zunimmt. Andererseits wird auch beim Einkneten der Säure in das trockene Schichtsilicat Energie verbraucht, wenn eine homogene Verteilung der Säure im Schichtsilicat erfolgen soll. Um einerseits eine gute Vermischung der Aktivierungssäure mit dem Schichtsilicat zu erzielen, und um andererseits den Energiebedarf beim Verdampfen des Wassers möglichst gering zu halten, verwendet man zweckmäßig eine Suspension mit einem möglichst hohen Feststoffgehalt, die sich noch gut rühren läßt.

Die Säureaktivierung wird vorzugsweise mit einer Mineralsäure, wie Schwefelsäure, Salzsäure, Salpetersäure oder Phosphorsäure, durchgeführt. Vorzugsweise verwendet man Schwefelsäure, da diese bei der Säureaktivierung und auch zu Beginn der sich daran anschließenden Calcinierung nicht verdampft und auf diese Weise auch noch am Anfang der Calcinierung die Aktivierung vervollständigt, so daß die Aktivierung mit einer geringen Menge an Säure durchgeführt werden kann. Außerdem ist das bei der Aktivierung gebildete Calciumsulfat bei Raumtemperatur oder leicht erhöhten Temperaturen verhältnismäßig unlöslich, ist aber in der Lage, bei den Calciniertemperaturen in die Mikroporen zu wandern und sich darin abzuscheiden. Eine ähnliche Wirkung hat die Phosphorsäure, die aber vorzugsweise nicht allein verwendet wird, da schwer lösliches Aluminiumphosphat gebildet wird, das während der Calcinierung nicht so leicht in die Mikroporen wandert. Dieser Nachteil kann aber bei Verwendung eines Gemisches aus Schwefelsäure und Phosphorsäure behoben werden.

Die Verwendung von Salzsäure wird weniger bevorzugt, da diese bei der Aktivierung abdampft und lösliche Salze bildet, die aus den Mikroporen wieder herausgewaschen werden können. Man kann aber Salzsäure verwenden, wenn die Aktivierung bei Überdruck in einem Autoklaven durchgeführt wird. Die geschilderten Nachteile lassen sich auch dadurch ausschalten, daß man ein Gemisch aus Schwefelsäure und Salzsäure verwendet.

Das calcinierte Schichtsilicat kann auch gewaschen werden, insbesondere wenn der Restgehalt an Säuren und löslichen Salzen mehr als etwa 2 Gew.-% beträgt und/oder wenn das Porenvolumen des calcinierten Schichtsilicats weniger als etwa 0,2 ml/g beträgt. Ein Säureüberschuß tritt dann auf, wenn das Ausgangsmaterial wenig Alkali- und Erdalkalimetalle enthält und wenn zur Erhöhung des Aufschlußgrades eine größere Säuremenge verwendet werden muß. Entsprechendes gilt, wenn das Porenvolumen des calcinierten Schichtsilicats weniger als 0,2 ml/g, insbesondere weniger als 0,15 ml/g, beträgt. In diesem Fall können nicht alle bei der sauren Aktivierung gebildeten Salze in die Mikroporen wandern und verbleiben auf der Oberfläche der Mesoporen und der Makroporen, wodurch die Aktivität des calcinierten Schichtsilicats herabgesetzt wird. Durch das Waschen werden im wesentlichen nur die an der Oberfläche der Mesoporen und der Makroporen adsorbierten Salze entfernt, während die in den Mikroporen abgeschiedenen Salze zum größten Teil in dem Material verbleiben. Dadurch wird die beim Auswaschen in das Waschwasser gehende Salzmenge reduziert, was aus Gründen des Umweltschutzes erwünscht ist.

Nach dem Waschen wird das calcinierte Schichtsilicat getrocknet und gegebenenfalls zerkleinert.

Vorzugsweise wird das calcinierte Schichtsilicat vor dem Waschen in Wasser, Säure oder in einer Aluminiumsalzlösung suspendiert. Auf diese Weise wird der Waschprozeß vereinfacht, wobei auch in diesem Fall die in den Mikroporen abgeschiedenen Salze nur zum Teil herausgelöst werden. Die Behandlung mit einer Aluminiumsalzlösung, vorzugsweise mit einer Aluminiumsulfatlösung, hat ferner den Vorteil, daß die and der Oberfläche der Mesoporen und der Makroporen befindlichen OH-Gruppen mit Al³⁺-Ionen umgesetzt werden, wodurch sich die Oberflächenacidität des Materials erhöht. Dies ist für eine Reihe von Anwendungen des erfindungsgemäßen Produktes günstig. Beispielsweise werden an der sauren Oberfläche des Materials Farbstoffmoleküle gespalten, wodurch der Bleicheffekt des erfindungsgemäßen Materials verbessert wird.

Gegenstand der Erfindung ist ferner die Verwendung des nach dem erfindungsgemäßen Verfahren hergestellten aktivierten Schichtsilicats zur Entfernung von Verunreinigungen aus Ölen, Fetten und Wachsen. Es können erfindungsgemäß mineralische, tierische oder pflanzliche Öle behandelt werden. Insbesondere eignen sich die erfindungsgemäßen Produkte als Bleichmittel für Speiseöle und Speisefette, wie Olivenöl, Leinöl, Sojaöl und Rapsöl, daneben auch für mineralische Altöle. Die erfindungsgemäßen Produkte adsorbieren z.B. gefärbte Verunreinigungen, wie Chlorophyll oder Xanthophyll in den Meso- und Makroporen. Ferner werden die in Ölen und Fetten enthaltenen Phospholipide adsorbiert, und zwar in erster Linie in den Makroporen.

Die zur Kennzeichnung der erfindungsgemäßen Produkte verwendeten physikalischen Merkmale werden wie folgt bestimmt:

### 1. Ionenumtauschfähigkeit ( IUF)

Das zu untersuchende Schichtsilicat wird über einen Zeitraum von 2 Stunden bei 150°C getrocknet. Anschließend wird das getrocknete Material mit einem großen Überschuß an wäßriger NH₄Cl-Lösung 1 Stunde unter Rückfluß zur Reaktion gebracht. Nach einer Standzeit von 16 Stunden bei Raumtemperatur wird filtriert, worauf der Filterkuchen gewaschen, getrocknet und gemahlen und der NH₄-Gehalt im Schichtsilicat nach Kjeldahl bestimmt wird.

### 2. pH-Wert des Ausgangsmaterials

10 g eines getrockneten Schichtsilicats werden unter Rühren in 100 ml destilliertem Wasser 30 min. suspendiert. Nach dem Absetzen des Schichtsilicats wird der pH-Wert der überstehenden Lösung mit Hilfe einer pH-Elektrode bestimmt.

### 3. Porenvolumen

Das Porenvolumen wird nach CCl₄-Methode bestimmt (H.A. Benesi, R.V. Bonnar, C.F. Lee, Anal. Chem. 27 (1955), Seite 1963.

Zur Ermittlung der Porenvolumina für verschiedene Porendurchmesserbereiche werden definierte partielle CCl₄-Dampfdrucke durch Mischen von CCl₄ mit Paraffin eingestellt.

### 4. Spezifische Oberfläche

Diese wird nach der BET-Methode (Einpunktmethode mit Stickstoff nach DIN 66131) bestimmt.

Die Erfindung ist durch die nachstehenden Beispiele erläutert:

### Beispiel 1

### Säurebehandlung und Calcinierung von Halloysit

Ein natürlicher Halloysit mexikanischen Ursprungs wird mit 3 Gew.-% Schwefelsäure aktiviert. Dazu werden 700 g des Rohtons (Wassergehalt 36%) in einem Werner-Pfleiderer-Mischer mit 300 ml H₂O und 14,0 g 96%-iger H₂SO₄ 10 min lang intensiv bei 30°C verknetet. Anschließend wird das Material 60 min bei 300°C calciniert.

Das trockene Röstgut wird mit 55 ml Wasser angefeuchtet und auf einer Retsch-Schlagkreuzmühle (Maschenweite 0,12 mm) gemahlen. Das Mahlgut wird gesiebt, so daß sich folgende Siebrückstände einstellen:
Siebrückstand 63 µm: 25-35%
Siebrückstand 25 µm: 50-60%

### Beispiel 1a

### Säurebehandlung und Calcinierung von Halloysit bei variabler Calciniertemperatur

Ein mexikanischer Halloysit wird gemäß Beispiel 1 mit 3% H₂SO₄ aktiviert. Die Calcinierung findet bei Temperaturen von 100°C, 200°C und 300°C (jeweils 60 min) statt. Die Proben werden anschließend mit destilliertem Wasser auf einen Wassergehalt von 8-10 Gew.-% angefeuchtet. Das Vermahlen und Sieben erfolgt wie nach Beispiel 1.

Die Eigenschaften der Produkte nach den Beispielen 1 und 1a sind in Tabelle I angegeben.

**Tabelle I**

| Charakterisierung der Edukte und Produkte der Halloysit-Aktivierung (Beispiele 1 und 1a) | | | | | | | |
|---|---|---|---|---|---|---|---|
| | BET-Oberfläche (m²/g) | IUF (mVal/100g) | pH-Wert | Wassergehalt (Gew.-%) | Porenvolumen ml/g | | |
| | | | | | 0-80nm | 0-25nm | 0-14nm |
| Halloysit-Rohton | 167 | 67,6 | 8,3 | 36 | 0,274 | 0,233 | 0,180 |
| Beispiel 1 | 142 | 48,7 | 3,4 | 9,5 | 0,261 | 0,217 | 0,144 |
| Beispiel 1a (100°C) | 143 | 55,3 | 2,1 | 9,8 | 0,219 | 0,183 | 0,160 |
| Beispiel 1a (200°C) | 146 | 49,1 | 3,0 | 8,9 | 0,222 | 0,190 | 0,171 |
| Beispiel 1a (300°C) | 142 | 48,7 | 3,4 | 8,4 | 0,270 | 0,213 | 0,138 |

### Beispiel 2

### Säurebehandlung und Calcinierung von Halloysit

Die Versuchsdurchführung von Beispiel 1 wird mit der Abweichung wiederholt, daß 28,0 g 96%ige H₂SO₄ eingeknetet werden und die Rückfeuchtung mit 59 ml Wasser durchgeführt wird. Das Vermahlen und das Sieben erfolgt gemäß Beispiel 1. Die Eigenschaften der Produkte sind in Tabelle II angegeben.

### Beispiel 3

### Säurebehandlung, Calcinierung und Waschen von Halloysit

100 g des nach Beispiel 2 gewonnenen Materials (calciniert und gemahlen) werden in 280 ml destilliertem Wasser 10 min lang suspendiert. Anschließend wird über eine Filternutsche filtriert. Der Filterkuchen wird dreimal mit je 1 Liter Wasser gewaschen. Anschließend wird das Material bei 100°C auf eine Restfeuchte von 8 bis 10 Gew.-% getrocknet. Das Material wird neu aufgemahlen und wie nach Beispiel 1 gesiebt.

Die Produkteigenschaften sind in Tabelle II angegeben.

### Beispiel 4

### Säurebehandlung, Calcinierung und Aluminiumionenaustausch an Halloysit

100 g des calcinierten und gemahlenen Materials von Beispiel 1 werden mit 100 ml 4%iger Al₂(SO₄)₃-Lösung 30 min resuspendiert, filtriert und dreimal mit je 1 Liter destilliertem Wasser gewaschen. Das Material wird bei 100°C auf eine Restfeuchte von 8 bis 10 Gew.-% getrocknet und wie nach Beispiel 1 vermahlen und gesiebt.

Die Produkteigenschaften sind in Tabelle II angegeben.

**Tabelle II**

| Charakterisierung der Edukte und Produkte der Halloysit-Aktivierung (Beispiele 2 bis 4) | | | | | | | |
|---|---|---|---|---|---|---|---|
| | BET-Oberfläche (m²/g) | IUF (mVal/100g) | pH Wert | Wassergehalt (Gew.-%) | Porenvolumen ml/g | | |
| | | | | | 0-80nm | 0-25nm | 0-14nm |
| Halloysit-Rohton | 167 | 67,6 | 8,3 | 36 | 0,274 | 0,233 | 0,180 |
| Beispiel 2 | 125 | n.b. | 2,4 | 10,0 | n.b | n.b. | n.b. |
| Beispiel 3 | 185 | n.b. | 2,7 | 9,1 | n.b | n.b. | n.b. |
| Beispiel 4 | 142 | n.b. | 3,5 | 9,8 | n.b | n.b. | n.b. |
| * n.b. = nicht bestimmt | | | | | | | |

### Beispiel 5

### Säurebehandlung und Calcinierung von Bentonit

500 g südafrikanischer Bentonit mit einem Wassergehalt von 38 Gew.-%, einer BET-Oberfläche von 63,4 m²/g, einer IUF von 80,0 mVal/100 g, einem pH-Wert von 7,9 und einem Gesamt-Porenvolumen (0-80 nm) von 0,120 ml/g werden in einem Werner-Pfleiderer-Mischer unter Zugabe von 150 ml destilliertem Wasser und 19,38 g 96%iger H₂SO₄ 10 min bei etwa 30°C verknetet. Das Material wird 60 min bei 300°C calciniert. Das calcinierte Material wird mit 35 ml destilliertem Wasser angefeuchtet und vermahlen. Das Mahlen und Sieben erfolgt wie nach Beispiel 1.

### Beispiel 6

### Säurebehandlung und Calcinierung von basischem Attapulgit

500 g basischer, amerikanischer (Georgia) Attapulgit (Wassergehalt 30 Gew.-%, BET-Oberfläch 132 m²/g, IUF 38,5 mVal/100 g, pH-Wert 7,4, Porenvolumina (0-80 nm) = 0,350 ml/g; (0-25 nm) = 0,224 ml/g; (0-14 nm) = 0,178 ml/g) werden im Werner-Pfleiderer-Mischer unter Zugabe von 250 ml Wasser und 10,94 g 96%iger H₂SO₄ 10 min bei 30°C verknetet und anschließend 60 min bei 300°C calciniert. Dieses Material wird mit 55 ml destilliertem Wasser angefeuchtet und anschließend wie nach Beispiel 1 vermahlen und gesiebt.

### Beispiel 7

### Säurebehandlung, Calcinierung und Aluminiumionenaustausch von basischem Attapulgit

250 g des gemahlenen Materials von Beispiel 6 werden in 375 ml einer 4%-igen Al₂(SO₄)₃-Lösung 30 min gerührt. Das so behandelte Material wird anschließend filtriert und dreimal mit je 1 Liter destilliertem Wasser gewaschen. Das Material wird bei 100°C auf einen Wassergehalt von 8-10 Gew.-% getrocknet und wie nach Beispiel 1 vermahlen und gesiebt.

### Anwendungsbeispiele

Die Sorptionsmittel nach den Beispielen 1 bis 8 werden an verschiedenen Ölen auf ihre Bleichwirkung hin überprüft. Die Bleichwirkung wurde nach der "Lovibond Colour Scan"-Methode bestimmt. Zum Vergleich wurden auch handelsübliche, säureaktivierte Bleicherden, nämlich die Produkte Actisil® FF, Tonsil® ACC L80 FF und Tonsil® Optimum FF (alles Handelsprodukte der Firma Süd-Chemie AG) herangezogen. Der Chlorophyll-Gehalt des Öls wurde ebenfalls spektroskopisch bestimmt.

### Anwendungsbeispiel 1

### Bleichung von Sojaöl mit aktiviertem Halloysit

Entschleimtes Sojaöl mit folgenden physikalischen Daten wurde mit den Sorptionsmitteln nach den Beispielen 1 bis 4 sowie zum Vergleich mit Actisil® FF gebleicht:

| | |
|---|---|
| Lovibond-Farbzahl rot | 10,0 |
| Lovibond-Farbzahl gelb | 69,0 |
| Chlorophyll-A-Gehalt | 0,54 ppm |

Dieses Beispiel verdeutlicht die hohe Aktivität der durch Säureeinknetung und Calcination aktivierten Materialien im Vergleich zu hochaktivierter Bleicherde (Actisil® FF).

Die Aktivität kann durch Waschen (Beispiel 3) bzw. durch Aluminiumionenaustausch (Beispiel 4) noch weiter gesteigert werden.

Die Bleichergebnisse sind in Tabelle III aufgeführt.

**Tabelle III**

| Bleichung von entschleimtem Sojaöl mit aktiviertem Halloysit (Anwendungsbeispiel 1) | | | | | | | |
|---|---|---|---|---|---|---|---|
| Sorptionsmittel | Gew.-% Ton | Temperatur (°C) | Vakuum (mbar) | Zeit (min) | Lovibond Farbzahl 5 1/4" | | Chlorophyll A (ppm) |
| | | | | | rot | gelb | |
| Beisp. 1 | 0,6 | 105 | 16 | 30 | 3,1 | 68,0 | 0,06 |
| Beisp. 2 | 0,8 | 105 | 16 | 30 | 3,0 | 69,0 | 0,05 |
| Beisp. 3 | 0,6 | 105 | 16 | 30 | 2,9 | 68,0 | 0,04 |
| Beisp. 4 | 0,8 | 105 | 16 | 30 | 2,6 | 69,0 | 0,03 |
| Actisil® FF | 0,6 | 105 | 16 | 30 | 3,5 | 68,0 | 0,02 |

### Anwendungsbeispiel 2

### Bleichung von Sonnenblumenöl mit aktiviertem Halloysit

Es wurde vorentschleimtes Sonnenblumenöl mit folgenden physikalischen Parametern gebleicht:

| | |
|---|---|
| Lovibond-Farbzahl rot | 2,9 |
| Lovibond-Farbzahl gelb | 70 |
| Chlorophyll A-Gehalt | 0,14 ppm |

Die Ergebnisse der Bleichversuche sind in Tabelle IV aufgeführt. Dieses Beispiel zeigt die bessere Bleichwirkung des erfindungsgemäß erhaltenen Produktes gegenüber einer bekannten Bleicherde.

**Tabelle IV**

| Bleichung von entschleimten Sonnenblumenöl mit aktiviertem Halloysit (Anwendungsbeispiel 2) | | | | | | | |
|---|---|---|---|---|---|---|---|
| Sorptionsmittel | Gew.-% Ton | Temperatur ( C) | Vakuum (mbar) | Zeit (min) | Lovibond Farbzahl 5 1/4" | | Chlorophyll A (ppm) |
| | | | | | rot | gelb | |
| Beisp. 1 | 0,15 | 95 | 16 | 20 | 1,0 | 16 | 0,04 |
| Actisil® FF | 0,15 | 95 | 16 | 20 | 1,6 | 29 | 0,04 |

### Anwendungsbeispiel 3

### Bleichung von Palmöl mit aktiviertem Halloysit

Mit den Sorptionsmitteln nach den Beispielen 1 und 2 wurde vorentschleimtes Palmöl mit folgenden physikalischen Daten gebleicht:

| | |
|---|---|
| Lovibond-Farbzahl rot | 21,5 |
| Lovibond-Farbzahl gelb | 69,1 |
| Chlorophyll A-Gehalt | 0,0 ppm |

Die Ergebnisse der Bleichversuche sind in Tabelle V (im Vergleich zu Actisil® FF angegeben. Beide erfindungsgemäßen Beispiele haben bei der Palmölbleichung etwa die gleiche Aktivität wie Actisil® FF.

**Tabelle V**

| Bleichung von entschleimten Palmöl mit aktiviertem Halloysit (Anwendungsbeispiel 3) | | | | | | |
|---|---|---|---|---|---|---|
| Sorptionsmittel | Gew.-% Ton | Temperatur (°C) | Vakuum (mbar) | Zeit (min) | Lovibond-Farbzahl 5 1/4" | |
| | | | | | rot | gelb |
| Beisp. 1 | 1,0 | 120 | 40 | 30 | 14,3 | 69 |
| Beisp. 2 | 1,0 | 120 | 40 | 30 | 13,0 | 69 |
| Actisil® FF | 1,0 | 120 | 40 | 30 | 14,0 | 69 |

### Anwendungsbeispiel 4

### Bleichung von Rapsöl mit aktiviertem Halloysit

Mit den Sorptionsmitteln nach den Beispielen 1 und 2 wurde entschleimtes Rapsöl mit folgenden physikalischen Eigenschaften gebleicht:

| | |
|---|---|
| Lovibond-Farbzahl rot | 5,1 |
| Lovibond-Farbzahl gelb | 69 |
| Chlorophyll-A-Gehalt | 3,94 ppm |

Die Ergebnisse der Bleichversuche (im Vergleich zu Actisil® FF) sind in Tabelle VI angegeben. Die erfindungsgemäßen Beispiele haben eine etwas bessere Lovibond-Farbzahl rot als Actisil® FF.

**Tabelle VI**

| Bleichung von entschleimten Rapsöl mit aktiviertem Halloysit (Anwendungsbeispiel 4) | | | | | | | |
|---|---|---|---|---|---|---|---|
| Sorptionsmittel | Gew.-% Ton | Temperatur (°C) | Vakuum (mbar) | Zeit (min) | Lovibond Farbzahl 5 1/4" | | Chlorophyll A (ppm) |
| | | | | | rot | gelb | |
| Beisp. 1 | 0,6 | 110 | 16 | 30 | 3,0 | 69 | 0,22 |
| Beisp. 3 | 0,6 | 110 | 16 | 30 | 3,0 | 69 | 0,27 |
| Actisil® FF | 0,6 | 110 | 16 | 30 | 3,3 | 69 | 0,19 |

### Anwendungsbeispiel 5

### Bleichung von Sojaöl mit bei verschiedenen Temperaturen aktiviertem Halloysit

Mit den Sorptionsmitteln nach dem Beispiel 1a wurde vorentschleimtes Sojaöl mit folgenden physikalischen Eigenschaften gebleicht:

| | |
|---|---|
| Lovibond-Farbzahl rot | 10,9 |
| Lovibond-Farbzahl gelb | 69 |
| Chlorophyll A-Gehalt | 0,85 ppm |

Die Ergebnisse der Bleichversuche sind in Tabelle VII angegeben. Das Beispiel zeigt, daß erst ab einer Calciniertemperatur von 200°C eine ausreichende Aktivierung des säureaktivierten Halloysits erfolgt.

**Tabelle VII**

| Bleichung von entschleimten Sojaöl mit bei verschiedenen Temperaturen aktiviertem Halloysit (Anwendungsbeispiel 5) | | | | | | | |
|---|---|---|---|---|---|---|---|
| Sorptionsmittel | Gew.-% Ton | Temperatur ( C) | Vakuum (mbar) | Zeit (min) | Lovibond-Farbzahl 5 1/4" | | Chlorophyll A (ppm) |
| | | | | | rot | gelb | |
| Beisp. 1a (100°C) | 0,8 | 105 | 16 | 30 | 7,0 | 69 | 0,26 |
| Beisp. 1a (200°C) | 0,8 | 105 | 16 | 30 | 4,4 | 69 | 0,05 |
| Beisp. 1a (300°C) | 0,8 | 105 | 16 | 30 | 3,1 | 69 | 0,04 |

### Anwendungsbeispiel 6

### Bleichung von Maisöl mit aktiviertem Bentonit

Für die mit dem Sorptionsmittel nach Beispiel 5 durchgeführter Bleichversuche wurde vorentschleimtes und neutralisierte Maisöl mit folgenden physikalischen Eigenschaften verwendet:

| | |
|---|---|
| Lovibond-Farbzahl rot | 5,9 |
| Lovibond-Farbzahl gelb | 30,0 |

Die Ergebnisse der Bleichversuche sind im Vergleich zu Tonsil® ACC L 80 FF in Tabelle VIII angegeben. Daraus ergibt sich, daß auch Bentonite nach dem erfindungsgemäßen Verfahren mit Erfolg aktiviert werden können.

**Tabelle VIII**

| Bleichung von entschleimtem und neutralisiertem Maisöl mit Bentonit (Anwendungsbeispiel 6) | | | | | | |
|---|---|---|---|---|---|---|
| Sorptionsmittel | Gew.-% Ton | Temperatur (°C) | Vakuum (mbar) | Zeit (min) | Lovibond-Farbzahl 5 1/4" | |
| | | | | | rot | gelb |
| Beisp. 5 | 1,5 | 110 | 40 | 30 | 3,0 | 30,0 |
| Tonsil® ACC L80 FF | 1,5 | 110 | 40 | 20 | 3,1 | 20,0 |

### Anwendungsbeispiel 7

### Bleichung von Sojaöl mit aktiviertem basischem Attapulgit

Die Bleichung wurde mit dem Sorptionsmittel nach Beispiel 6 an entschleimtem Sojaöl mit folgenden physikalischen Eigenschaften durchgeführt:

| | |
|---|---|
| Lovibond-Farbzahl rot | 10,7 |
| Lovibond-Farbzahl gelb | 70,0 |
| Chlorophyll-A-Gehalt | 0,48 |

Die Ergebnisse der Bleichversuche sind in Tabelle IX dargestellt. Dieses Beispiel belegt die Möglichkeit der Aktivierung von basischen Attapulgiten nach dem erfindungsgemäßen Verfahren.

**Tabelle IX**

| Bleichung von entschleimten Sojaöl mit aktiviertem basischem Attapulgit (Anwendungsbeispiel 7) | | | | | | | |
|---|---|---|---|---|---|---|---|
| Sorptionsmittel | Gew.-% Ton | Temperatur (°C) | Vakuum (mbar) | Zeit (min) | Lovibond Farbzahl 5 1/4" | | Chlorophyll A ppm |
| | | | | | rot | gelb | |
| Beisp. 6 | 0,5 | 105 | 20 | 30 | 7,9 | 70,0 | 0,05 |
| Tonsil® Optimum FF | 0,5 | 105 | 20 | 30 | 4,5 | 70,0 | 0,05 |

## Patentansprüche

1. Verfahren zur Aktivierung von Schichtsilicaten mit einer Ionenumtauschfähigkeit (IUF) von mindestens 25 mVal/g durch Behandlung derselben mit einer Säure, **dadurch gekennzeichnet, daß** man das Schichtsilicat mit etwa 1 bis 10 Gew.-% einer Säure (bezogen auf Schichtsilicat atro) bei einer Temperatur von nicht mehr als 80°C aktiviert und das aktivierte Schichtsilicat bei Temperaturen von etwa 200 bis 400°C calciniert und gegebenenfalls zerkleinert.

2. Verfahren nach Anspruch 1, **dadurch gekennzeichnet, daß** man die Calcinierung in Abhängigkeit von der Calciniertemperatur über einen Zeitraum von etwa 4 Stunden bis 15 Minuten durchführt.

3. Verfahren nach Anspruch 1 oder 2, **dadurch gekennzeichnet, daß** man das calcinierte Produkt vor der Zerkleinerung anfeuchtet.

4. Verfahren nach einem der Ansprüche 1 bis 3, **dadurch gekennzeichnet, daß** man ein Schichtsilicat aus der Serpentin-Kaolin-Gruppe, der Talk-Pyrophyllit-Gruppe, der Smektit-Gruppe, aus der Gruppe der Vermiculite, Illite und/oder der glimmerartigen Schichtsilicate verwendet.

5. Verfahren nach einem der Ansprüche 1 bis 4, **dadurch gekennzeichnet, daß** man als Ausgangsmaterial ein Schichtsilicat verwendet, das in Form einer 9,1%igen wäßrigen Suspension einen pH-Wert von mehr als 7, vorzugsweise von 7,2 bis 9,0, hat.

6. Verfahren nach einem der Ansprüche 1 bis 5, **dadurch gekennzeichnet, daß** man die Aktivierungssäure einer Suspension des Schichtsilicats zusetzt oder in das Schichtsilicat einknetet.

7. Verfahren nach einem der Ansprüche 1 bis 6, **dadurch gekennzeichnet, daß** man die Säureaktivierung mit einer Mineralsäure, insbesondere Schwefelsäure, durchführt.

8. Verfahren nach einem der Ansprüche 1 bis 7, **dadurch gekennzeichnet, daß** man das calcinierte Schichtsilicat wäscht, insbesondere wenn der Restgehalt an Säure und Salzen mehr als etwa 2 Gew.-% beträgt und/oder wenn das Porenvolumen des Schichtssilicats weniger als 0,2 ml/g beträgt, worauf man das gewaschene Material trocknet.

9. Verfahren nach Anspruch 8, **dadurch gekennzeichnet, daß** man das calcinierte Schichtsilicat vor dem Waschen in Wasser, Säure oder einer Aluminiumsalzlösung suspendiert.

10. Verwendung des nach einem der Ansprüche 1 bis 9 hergestellten aktivierten Schichtsilicats zur Entfernung von Verunreinigungen aus Ölen, Fetten und Wachsen.

## Claims

1. A process for activating phyllosilicates with an ionexchange capacity (IEC) of at least 25 mVal/g by treatment thereof with an acid, **characterised in that** the phyllosilicate is activated with approx. 1 to 10 wt.% of an acid (relative to phyllosilicate, absolutely dry) at a temperature of no more than 80°C and the activated phyllosilicate is calcined at temperatures of approx. 200 to 400°C and optionally comminuted.

2. A process according to claim 1, **characterised in that**, depending on the calcination temperature, calcination is performed over a period of approx. 4 hours to 15 minutes.

3. A process according to claim 1 or 2, **characterised in that** the calcined product is moistened prior to comminution.

4. A process according to one of claims 1 to 3, **characterised in that** a phyllosilicate is used which is from the serpentine-kaolin group, the talcum-pyrophyllite group, the smectite group, from the group of vermiculites, illites and/or mica-like phyllosilicates.

5. A process according to one of claims 1 to 4, **characterised in that** the starting material used is a phyllosilicate which, in the form of a 9.1% aqueous suspension, has a pH value of more than 7, preferably of 7.2 to 9.0.

6. A process according to one of claims 1 to 5, **characterised in that** the activation acid is added to a suspension of the phyllosilicate or kneaded into the phyllosilicate.

7. A process according to one of claims 1 to 6, **characterised in that** acid activation is performed with a mineral acid, in particular sulfuric acid.

8. A process according to one of claims 1 to 7, **characterised in that** the calcined phyllosilicate is washed, in particular if the residual content of acid and salts is more than approx. 2 wt.% and/or if the pore volume of the phyllosilicate is less than 0.2 ml/g, whereupon the washed material is dried.

9. A process according to claim 8, **characterised in that**, prior to washing, the calcined phyllosilicate is suspended in water, acid or an aluminium salt solution.

10. Use of the activated phyllosilicate produced according to one of claims 1 to 9 for the removal of impurities from oils, fats and waxes.

## Revendications

1. Procédé pour l'activation de phyllosilicates ayant une capacité d'échange d'ions (CEI) d'au moins 25 méqu./g, par traitement de ces derniers avec un acide, **caractérisé en ce qu'**on active le phyllosilicate avec environ 1 à 10 % en poids d'un acide (par rapport au phyllosilicate sec absolu) à une température non supérieure à 80°C, et on calcine à des températures d'environ 200 à 400°C et éventuellement on broie les phyllosilicates activés.

2. Procédé selon la revendication 1, **caractérisé en ce qu'**on met en oeuvre la calcination en fonction de la température de calcination pendant un laps de temps d'environ 4 heures à 15 minutes.

3. Procédé selon la revendication 1 ou 2, **caractérisé en ce qu'**on humecte le produit calciné avant le broyage.

4. Procédé selon l'une des revendications 1 à 3, **caractérisé en ce qu'**on utilise un phyllosilicate du groupe des serpentines-kaolins du groupe des talcs-pyrophyllites, du groupe des smectites, du groupe des vermiculites, des illites et/ou des phyllosilicates micacés.

5. Procédé selon l'une des revendications 1 à 4, **caractérisé en ce qu'**on utilise en tant que matière de départ un phyllosilicate qui sous forme d'une solution aqueuse à 9,1 % a un pH supérieur à 7 et de préférence de 7,2 à 9,0.

6. Procédé selon l'une des revendications 1 à 5, **caractérisé en ce qu'**on ajoute l'acide d'activation à une suspension du phyllosilicate, ou qu'on l'incorpore par malaxage dans le phyllosilicate.

7. Procédé selon l'une des revendications 1 à 6, **caractérisé en ce qu'**on met en oeuvre l'activation par un acide à l'aide d'un acide minéral, en particulier l'acide sulfurique.

8. Procédé selon l'une des revendications 1 à 7, **caractérisé en ce qu'**on lave le phyllosilicate calciné, en particulier quand la teneur résiduelle en acide et en sels est supérieure à environ 2 % en poids et/ou quand le volume des pores du phyllosilicate est inférieur à 0,2 ml/g, ce après quoi on sèche le matériau lavé.

9. Procédé selon la revendication 8, **caractérisé en ce que**, avant le lavage, on met en suspension le phyllosilicate calciné dans de l'eau, dans un acide ou dans une solution d'un sel d'aluminium.

10. Utilisation du phyllosilicate activé préparé selon l'une des revendications 1 à 9 pour éliminer des impuretés à partir d'huiles, de graisses et de cires.
